# FASCICULE DE BREVET EUROPEEN

(11) **EP 1 566 130 B1**
(45) Date de publication et mention de la délivrance du brevet: **19.07.2006**
(21) Numéro de dépôt: 05356026.4
(22) Date de dépôt: 08.02.2005
(51) Int. Cl.: A47J 43/07, A47J 43/046

(54) **Appareil electromenager de preparation culinaire**
Elektrisches Küchengerät
Electric kitchen-appliance

(30) Priorité: 20.02.2004 FR 0401714
(43) Date de publication de la demande: 24.08.2005
(73) Titulaire: SEB S.A., 69130 Ecully (FR)
(72) Inventeur: Martin, Philippe, 53940 Le Genest Saint Isle (FR); Feron, Stéphanie, 53440 Marcille la Ville (FR); Mancel, Arnaud, 53100 Mayenne (FR)
(74) Mandataire: Kiehl, Hubert

(56) Documents cités:
- FR-A- 2 742 647
- GB-A- 2 238 712
- US-A- 4 137 834
- US-B1- 6 223 652

## Description

La présente invention concerne le domaine technique général des appareils électroménagers de préparation culinaire tels que les robots ménager multifonctions et leurs accessoires. La présente invention est relative à un appareil comportant un récipient de travail fermé par un couvercle amovible et un accessoire pouvant être disposé à l'intérieur du récipient de travail, et se rapporte plus particulièrement aux moyens d'immobilisation en rotation de l'accessoire dans le récipient de travail lors du fonctionnement de l'appareil. L'invention se rapporte également à un accessoire muni de tels moyens d'immobilisation.

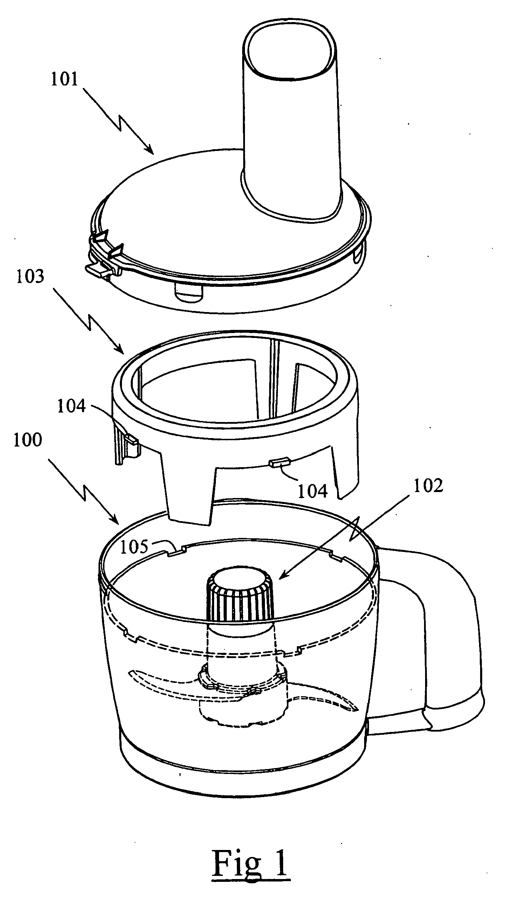

Il est connu de l'art antérieur représenté à la figure 1, un robot ménager comportant un bol 100 fermé par un couvercle amovible 101, le bol 100 comportant un outil rotatif 102 et pouvant recevoir un accessoire 103, appelé accessoire blender. Cet accessoire blender 103 comporte des bras munis de nervures permettant de réorienter le flux liquide de mixage vers l'outil rotatif 102. lors du mixage d'aliments générant une mixture sensiblement liquide, et éviter ainsi le débordement du liquide au niveau de la liaison entre le bol et le couvercle par l'effet de centrifugation. Dans cet appareil, l'accessoire blender 103 est immobilisé en rotation dans le bol 100 au moyen d'ergots 104 disposés sur la périphérie de l'accessoire 103, ces ergots 104 venant s'engager dans des encoches 105 formées sur la surface intérieure du bol 100, au niveau d'une surépaisseur de la paroi du bol 100.

Un tel moyen d'immobilisation de l'accessoire blender présente cependant l'inconvénient de nécessiter une attention particulière de l'utilisateur pour amener les ergots en regard des encoches lors de la mise en place de l'accessoire dans le bol. De plus, cette mise en place est compliquée par le fait que l'accessoire à tendance à se mettre de biais dans le bol. Le document FR-2 742 647 décrit les caractéristiques techniques du préambule de la revendication 1.

L'invention qui suit vise à pallier ces inconvénients en proposant un appareil électroménager muni d'un récipient pouvant recevoir un accessoire devant être immobilisé en rotation dans lequel l'accessoire peut être mis en place sans difficulté et notamment sans se soucier de sa position angulaire lors de son introduction dans le bol.

Le but de l'invention est atteint par un appareil électroménager de préparation culinaire comportant un récipient de travail fermé par un couvercle amovible et un accessoire, pour la réalisation d'une fonction particulière, pouvant être disposé à l'intérieur du récipient de travail, le récipient renfermant un outil de coupe disposé dans le fond du récipient de travail et entraîné en rotation par un moteur, caractérisé en ce que l'accessoire comporte un élément d'arrêt qui vient en appui contre une paroi du couvercle lors du fonctionnement de l'appareil pour assurer l'immobilisation en rotation de l'accessoire dans le récipient de travail et en ce que l'accessoire peut être disposé dans le récipient dans n'importe quelle position angulaire, l'accessoire pouvant, au démarrage de l'appareil, tourner dans le récipient jusqu'à ce que l'élément d'arrêt soit en appui contre la paroi du couvercle.

Selon une autre caractéristique de l'invention, le récipient de travail est un bol de section circulaire comportant une paroi intérieure lisse.

Un tel récipient présente l'avantage d'être facile à nettoyer.

Selon une autre caractéristique de l'invention, l'accessoire est soulevé vers le couvercle par le flux de mixage des aliments généré lors de la mise en marche de l'appareil.

Cette caractéristique permet de renforcer l'accrochage de l'accessoire lors du fonctionnement de l'appareil.

Selon une autre caractéristique de l'invention, l'élément d'arrêt est susceptible de venir en appui contre la paroi uniquement lorsque l'accessoire est soulevé par le flux de mixage.

Selon encore une autre caractéristique de l'invention, le couvercle comporte une cheminée pour l'introduction des aliments dans le récipient et l'élément d'arrêt est une languette venant s'insérer dans la cheminée lors du fonctionnement de l'appareil.

Selon encore une autre caractéristique de l'invention, l'outil de coupe comporte un moyeu s'étendant au centre du récipient et l'accessoire comporte un manchon de centrage dont le fond vient reposer contre le moyeu de l'outil de coupe lors de la mise en place de l'accessoire dans le récipient, l'accessoire se soulevant du moyeu lors du fonctionnement de l'appareil.

Une telle caractéristique procure une solution simple de centrage de l'accessoire.

Selon une autre caractéristique de l'invention, l'accessoire comporte des bras prenant place à proximité des parois internes du récipient, les bras comportant des nervures permettant de réorienter le flux de mixage vers le centre du récipient et des ailettes externes venant à proximité de la paroi interne du récipient.

L'invention se rapporte également à un accessoire pour appareil électroménager de préparation culinaire destiné à être inséré dans un récipient de travail renfermant en outil rotatif, le récipient étant fermé par un couvercle amovible, caractérisé en ce que l'accessoire comporte un élément d'arrêt qui vient en appui contre une paroi du couvercle lors du fonctionnement de l'appareil pour assurer l'immobilisation en rotation de l'accessoire dans le récipient de travail et en ce que l'accessoire peut être disposé dans le récipient dans n'importe quelle position angulaire, l'accessoire pouvant, au démarrage de l'appareil, tourner dans le récipient jusqu'à ce que l'élément d'arrêt soit en appui contre la paroi du couvercle.

Selon encore une autre caractéristique de l'invention, l'élément d'arrêt est une languette destinée à s'insérer dans une cheminée du couvercle pour l'introduction des aliments.

Une telle caractéristique procure une solution simple de blocage de l'accessoire.

Selon encore une autre caractéristique de l'invention, l'accessoire comporte un manchon de centrage destiné à venir reposer contre un moyeu de l'outil de coupe lors de la mise en place de l'accessoire dans le récipient.

Selon encore une autre caractéristique de l'invention, l'accessoire comporte des bras destinés à venir à proximité de la paroi interne du récipient, les bras comportant des nervures permettant de réorienter le flux de mixage vers le centre du récipient et des ailettes externes s'approchant de la paroi interne du récipient.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 précédemment décrite est une vue générale, en perspective éclatée, d'un récipient de robot ménager équipé d'un accessoire blender de l'art antérieur;
- la figure 2 est une vue générale en perspective d'un robot selon un mode particulier de réalisation de l'invention ;
- la figure 3 est une vue en perspective éclatée du récipient du robot de la figure 1 muni d'un accessoire blender selon un mode particulier de réalisation de l'invention ;
- la figure 4 est une vue de dessous, en perspective, de l'accessoire blender de la figure 3 représenté seul ;
- la figure 5 est une vue de dessous, en perspective, du couvercle du robot représenté seul ;
- la figure 6 est une vue de côté du récipient de la figure 3 illustrant un exemple de positionnement de l'accessoire blender avant la mise en marche de l'appareil ;
- la figure 7 est une vue similaire à la figure 6 représentant la position de l'accessoire blender lorsque ce dernier est bloqué en rotation contre le couvercle suite à la mise en marche de l'appareil ;
- la figure 8 est une vue en perspective de dessus du récipient équipé de l'accessoire blender lorsque ce dernier est bloqué en rotation contre le couvercle ;
- la figure 9 est une vue en coupe du récipient de la figure 8 suivant le plan radial passant par la poignée.

Seuls les éléments nécessaires à la compréhension de l'invention ont été représentés. Pour faciliter la lecture des dessins les mêmes éléments portent les mêmes références d'une figure à l'autre.

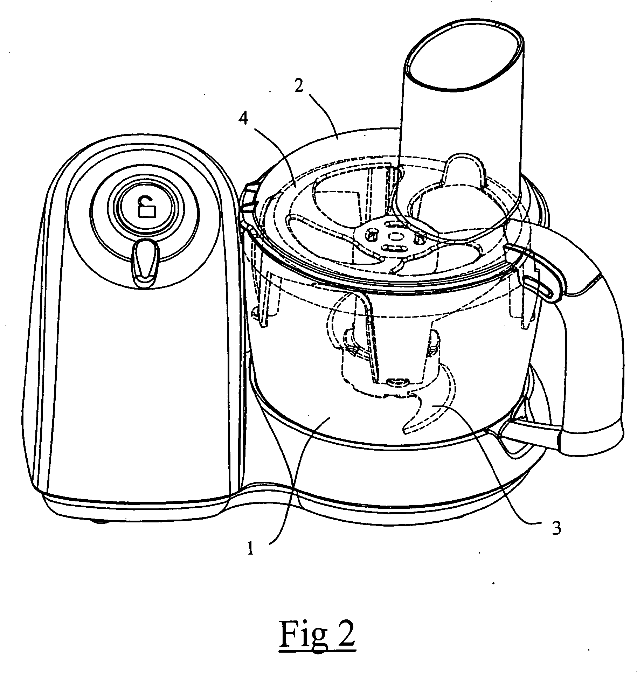

Le robot ménager de préparation culinaire illustré à la figure 2 comprend un socle destiné à recevoir un récipient 1 fermé par un couvercle 2. Le récipient est adjacent à un caisson comprenant un moteur entraînant en rotation un outil de coupe 3, représenté en pointillé sur la figure 2, au travers du fond du récipient 1. Le récipient 1 présente la forme d'un bol et est muni d'une paroi interne lisse.

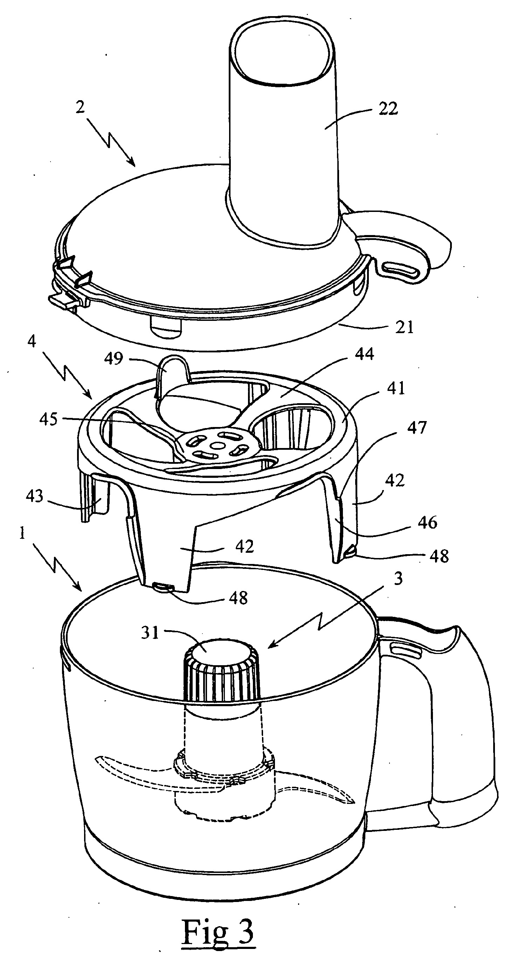

Comme on peut mieux le voir sur la figure 3, le couvercle 2 présente une jupe 21 assurant le centrage du couvercle 2 sur le récipient 1 et comporte, classiquement, une cheminée 22 de section ovale permettant l'introduction des aliments dans le récipient 1.

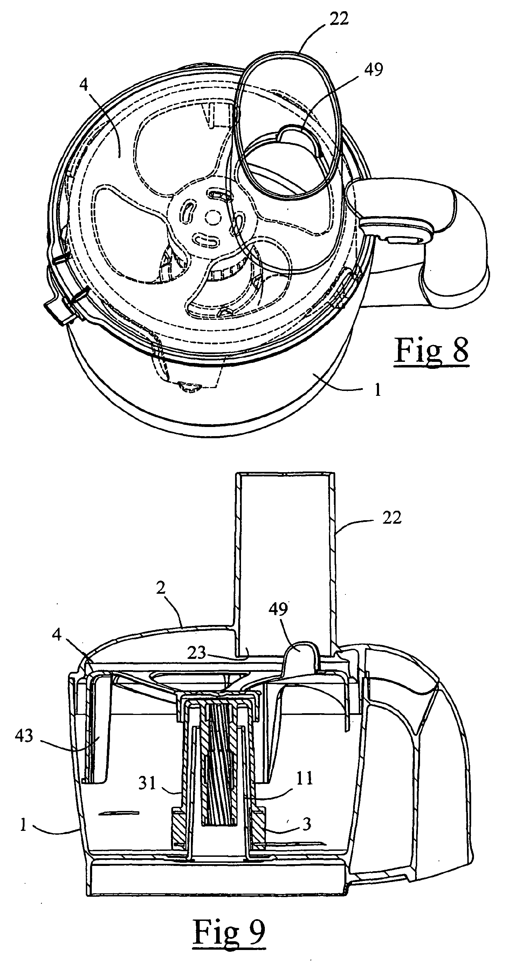

L'outil de coupe 3, comporte un moyeu de guidage 31 s'engageant sur un manchon de centrage 11, visible uniquement sur la figure 9, prenant naissance au fond du récipient 1.

Plus particulièrement selon l'invention, le moyeu de guidage 31 de l'outil de coupe est coiffé par un accessoire blender 4 permettant de rapporter des nervures dans le récipient 1 pour orienter le flux de mixage vers l'outil de coupe 3 lors du mixage d'aliments générant une mixture liquide.

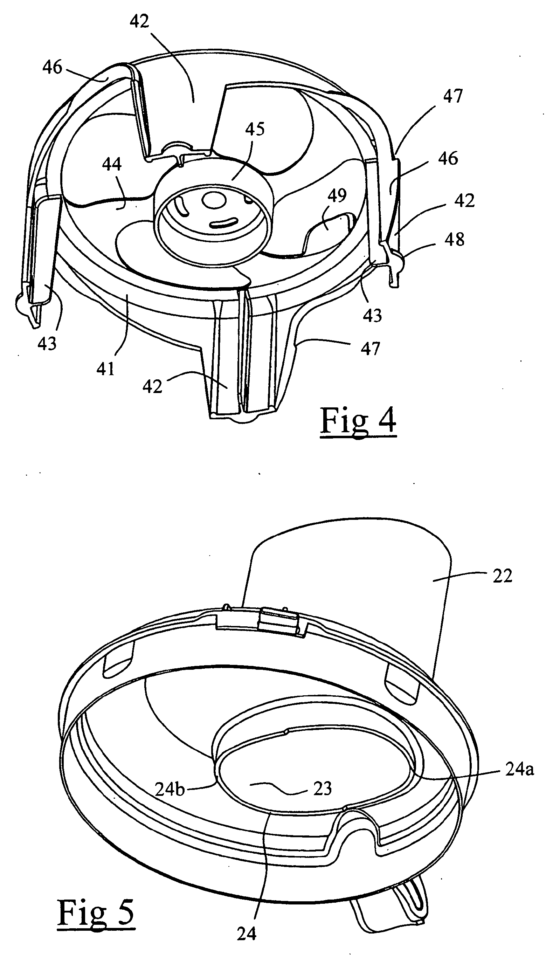

L'accessoire blender 4, représenté seul sur la figure 4, comporte une structure annulaire 41, de diamètre légèrement inférieur au diamètre du récipient 1, qui supporte quatre bras 42 venant prendre place à proximité de la paroi intérieure du récipient, ces quatre bras 42 s'étendant sensiblement parallèlement à l'axe de l'outil de coupe 3.

Les bras 42 comportent chacun une nervure 43 s'étendant radialement sur toute la hauteur des bras en direction de l'outil de coupe 3, ces nervures 43 réorientant la mixture vers l'outil de coupe lors du mixage.

Chaque bras 42 comporte également une ailette externe 46 disposée sur le bord du bras recevant en premier la mixture lors de la rotation de l'outil de coupe 3, cette ailette externe 46 s'étendant radialement vers l'extérieur et présentant un bord venant à proximité immédiate de la paroi interne qui épouse la courbure du récipient 1.

Conformément aux figures 3 et 4, les ailettes externes 46 présentent une partie inférieure s'étendant sensiblement verticalement èt présentent une partie supérieure courbée se prolongeant en bordure de la structure annulaire 41 suivant une direction sensiblement horizontale.

Le bord des ailettes externes 46 présente une échancrure formant un cran 47 venant en butée contre le bord inférieur de la jupe 21 du couvercle lorsque l'accessoire 4 est soulevé vers ce dernier.

Les bras 42 de l'accessoire blender 4 sont munis dans leur partie inférieure d'un bossage 48 s'étendant radialement vers l'extérieur et contribuant au centrage de l'accessoire blender 4 dans le récipient 1.

La structure annulaire 41 de l'accessoire blender est reliée par quatre éléments de liaison 44 à un manchon central 45 venant reposer sur le moyeu de guidage 31 de l'outil de coupe, le diamètre du manchon central 45 étant légèrement supérieur au diamètre de l'extrémité supérieure du moyeu de guidage 31.

L'accessoire blender 4 comporte également une languette 49 disposée à la jonction entre l'un des éléments de liaison 44 et la structure annulaire 41, cette languette 49 s'étendant vers le haut et présentant une hauteur adaptée pour que son extrémité supérieure n'interfère pas avec la surface supérieure bombée du couvercle 2 lorsque ce dernier est rapporté sur le récipient 1.

Dans le mode de réalisation particulier représenté, la languette 49 présente cependant une hauteur suffisante pour que, lorsque l'accessoire blender 4 est entraîné dans le sens de rotation de l'outil de coupe 3, le sommet de la languette 49 vienne en butée contre une paroi interne 23 faisant saillie à l'intérieur du couvercle.

La paroi interne 23, mieux visible sur la figure 5, appartient à une partie de la cheminée 22 faisant saillie à l'intérieur du couvercle et présente un bord inférieur 24 comportant une marche de sorte que le bord inférieur 24 de la cheminée présente une partie 24a, balayée en premier par l'accessoire blender lorsque ce dernier tourne dans le sens de rotation de l'outil, qui est plus haute que la partie 24b atteinte en dernier. La hauteur de la marche est adaptée pour que, lorsque le couvercle 2 est mis en place sur le récipient 1, le sommet de la languette 49 de l'accessoire 4 passe sous le bord inférieur surélevé 24a de la cheminé lorsque l'accessoire 4 tourne dans le sens de rotation de l'outil de coupe et vienne heurter le bord inférieur 24 de la cheminé sur sa partie 24b la plus basse.

Dans l'exemple illustré, la languette 49 présente une forme épousant la forme arrondie de la paroi interne de la cheminée sur laquelle elle vient prendre appui.

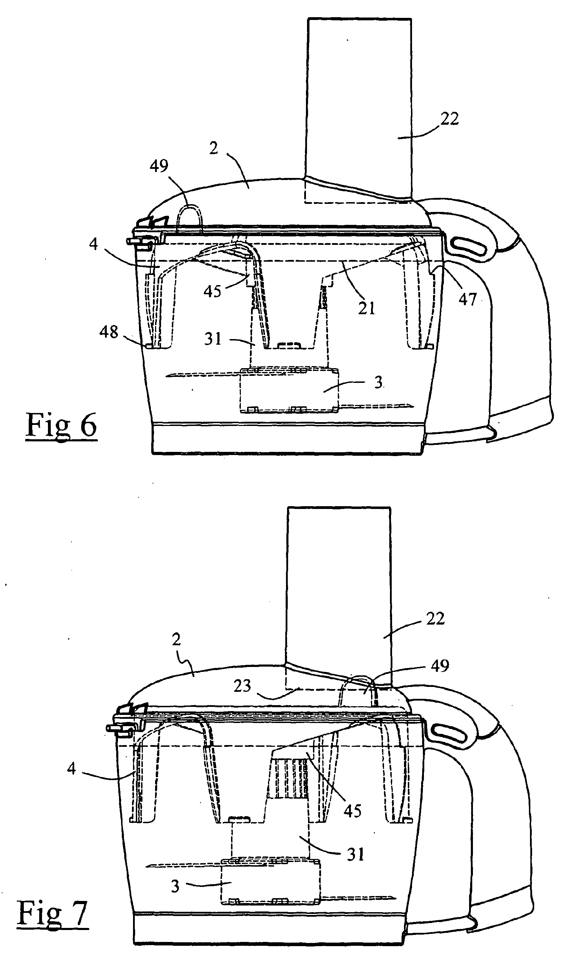

La mise en place de l'accessoire et son blocage en rotation automatique suite à la mise en marche du robot vont maintenant être décrits en relation avec les figures 6 à 9.

La figure 6 illustre un exemple de positionnement de l'accessoire blender 4 avant la mise en marche du robot. Dans cet exemple, l'utilisateur a disposé l'accessoire blender 4 dans le récipient 1 sans se soucier du positionnement angulaire de la languette 49 par rapport à la cheminée 22 du couvercle 2 et en amenant simplement le manchon central 45 de l'accessoire sur le sommet du moyeu de guidage 31 de l'outil de coupe. Cette mise en place de l'accessoire 4 est facilitée par la présence de la languette 49 sur la partie supérieure de l'accessoire 4 qui peut être facilement saisie entre le pouce et l'index pour manipuler l'accessoire 4.

Les figures 7 à 9 illustre le positionnement de l'accessoire blender 4 après quelques instants de fonctionnement du robot.

Conformément à ces figures, lors de la mise en marche du robot pour mixer des aliments, non représentés sur les figures, l'accessoire 4 est entraîné en rotation par le frottement du manchon central 45 sur le moyeu de guidage 31 de l'outil de coupe, ainsi que par la mise en mouvement des aliments, jusqu'à ce que le sommet de la languette 49 vienne heurter la paroi interne 23 de la cheminé 22. A cet instant, l'accessoire 4 est bloqué en rotation et le liquide de mixage centrifugé sur les parois internes du récipient 1, par la rotation de l'outil de coupe 3, vient heurter les bras 42 de l'accessoire 4, provoquant ainsi un soulèvement de l'accessoire blender 4 en direction du couvercle 2. Ce soulèvement de l'accessoire blender 4 est en partie assuré par les ailettes externes 46, et notamment par leur partie sensiblement horizontale, qui se situent en bordure de la paroi interne du récipient et reçoivent la poussée du liquide centrifugé dans le récipient, ces ailettes présentant également l'avantage d'éviter que des aliments non encore mixés ne se coincent à l'extérieur des bras 42.

Le déplacement de l'accessoire 4 en direction du couvercle s'effectue jusqu'à ce que les crans 47 présents sur les ailettes externes 46 viennent en butée contre le bord inférieur de la jupe 21 du couvercle 2, ces crans 47 permettant également d'empêcher le positionnement de biais de l'accessoire 4.

Lors de ce soulèvement de l'accessoire blender 4, la languette 49 s'engage encore davantage dans la cheminée 22, renforçant de ce fait le blocage en rotation de l'accessoire 4, et le manchon central 45 ne repose plus alors sur le moyeu de guidage 31, permettant ainsi d'éviter toute usure liée au frottement entre ces pièces.

Enfin, lorsque l'utilisateur arrête le moteur du robot, le liquide présent dans le récipient 1 n'est plus centrifugé et l'accessoire blender 4 redescend progressivement par gravité jusqu'à ce que le manchon central 45 repose de nouveau sur le moyeu de guidage 31 de l'outil rotatif 3.

Bien entendu, l'invention est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la hauteur de la languette ou de la paroi interne de la cheminée peut être telle que la languette ne vient prendre appui sur la paroi interne qu'après le soulèvement de l'accessoire blender en direction du couvercle sous l'effet de la poussée du liquide de mixage centrifugé. Une telle variante de réalisation permet d'obtenir un blocage uniquement dynamique de l'accessoire.

Ainsi, dans l'exemple décrit précédemment l'accessoire utilisé est un accessoire de type blender permettant de rapporter des nervures dans un récipient lisse. Cependant, le moyen d'immobilisation de l'accessoire selon l'invention pourra être appliqué à tout type d'accessoire nécessitant d'être bloqué en rotation lors du fonctionnement de l'appareil électroménager.

## Revendications

1. Appareil électroménager de préparation culinaire comportant un récipient (1) de travail fermé par un couvercle (2) amovible et un accessoire (4) pouvant être disposé à l'intérieur du récipient de travail (1), ledit récipient (1) renfermant un outil de coupe (3) disposé dans le fond du récipient de travail (1) et entraîné en rotation par un moteur, **caractérisé en ce que** ledit accessoire (4) comporte un élément d'arrêt (49) qui vient en appui contre une paroi (23) du couvercle (2) lors du fonctionnement de l'appareil pour assurer l'immobilisation en rotation de l'accessoire (4) dans le récipient de travail (1) et **en ce que** ledit accessoire (4) peut être disposé dans le récipient (1) dans n'importe quelle position angulaire, ledit accessoire (4) pouvant, au démarrage de l'appareil, tourner dans le récipient (1) jusqu'à ce que l'élément d'arrêt (49) soit en appui contre la paroi du couvercle (2).

2. Appareil électroménager selon la revendication 1, **caractérisé en ce que** ledit récipient de travail (1) est un bol de section circulaire comportant une paroi intérieure lisse.

3. Appareil électroménager selon l'une quelconque des revendications 1 à 2, **caractérisé en ce que** l'accessoire (4) est soulevé vers le couvercle (2) par le flux de mixage des aliments généré lors de la mise en marche de l'appareil.

4. Appareil électroménager selon l'une quelconque des revendications 1 à 3, en ce que ledit élément d'arrêt (49) est susceptible de venir en appui contre la paroi uniquement lorsque ledit accessoire (4) est soulevé par ledit flux de mixage.

5. Appareil électroménager selon l'une quelconque des revendications 3 à 4, **caractérisé en ce que** le couvercle (2) comporte une cheminée (22) pour l'introduction des aliments dans le récipient (1) et **en ce que** ledit élément d'arrêt est une languette (49) venant s'insérer dans la cheminée (22) lors du fonctionnement de l'appareil.

6. Appareil électroménager selon l'une quelconque des revendications 1 à 5, **caractérisé en ce que** ledit outil de coupe (3) comporte un moyeu (31) s'étendant au centre du récipient (1) et **en ce que** ledit accessoire (4) comporte un manchon de centrage (45) dont le fond vient reposer contre le moyeu (31) de l'outil de coupe (3) lors de la mise en place de l'accessoire (4) dans le récipient (1), ledit accessoire (4) se soulevant du moyeu (31) lors du fonctionnement de l'appareil.

7. Appareil électroménager selon l'une quelconque des revendications 1 à 6, **caractérisé en ce que** ledit accessoire (4) comporte des bras (42) prenant place à proximité des parois internes du récipient (1), lesdits bras (42) comportant des nervures (43) permettant de réorienter le flux de mixage vers le centre du récipient (1) et des ailettes externes (46) venant à proximité de la paroi interne du récipient (1).

8. Accessoire pour appareil électroménager de préparation culinaire destiné à être inséré dans un récipient de travail (1) renfermant un outil rotatif (3), ledit récipient (1) étant fermé par un couvercle (2) amovible, **caractérisé en ce que** ledit accessoire (4) comporte un élément d'arrêt (49) qui vient en appui contre une paroi du couvercle (2) lors du fonctionnement de l'appareil pour assurer l'immobilisation en rotation de l'accessoire (4) dans le récipient de travail (1) et **en ce que** ledit accessoire (4) peut être disposé dans le récipient (1) dans n'importe quelle position angulaire, ledit accessoire (4) pouvant, au démarrage de l'appareil, tourner dans le récipient (1) jusqu'à ce que l'élément d'arrêt (49) soit en appui contre la paroi du couvercle (2).

9. Accessoire pour appareil électroménager selon la revendication 8, **caractérisé en ce que** ledit élément d'arrêt (49) est une languette destinée à s'insérer dans une cheminée du couvercle pour l'introduction des aliments.

10. Accessoire pour appareil électroménager selon l'une quelconque des revendications 8 à 9, **caractérisé en ce qu'**il comporte un manchon de centrage (45) destiné à venir reposer contre un moyeu (31) de l'outil de coupe (3) lors de la mise en place de l'accessoire (4) dans le récipient.

11. Accessoire pour appareil électroménager selon l'une quelconque des revendications 8 à 10, **caractérisé en ce qu'**il comporte des bras (42) destinés à venir à proximité de la paroi interne du récipient (1), lesdits bras (42) comportant des nervures (43) permettant de réorienter le flux de mixage vers le centre du récipient (1) et des ailettes externes (46) s'approchant de la paroi interne du récipient (1).

## Claims

1. A food-processing household electrical appliance comprising a working receptacle (1) closed by a removable lid (2) and an accessory (4) suitable for being placed inside the working receptacle (1), said receptacle (1) containing a cutter tool (3) placed in the bottom of the working receptacle (1) to be driven in rotation by a motor, the appliance being **characterized in that** said accessory (4) includes a stop element (49) that comes to bear against a wall (23) of the lid (2) when the appliance is in operation in order to prevent the accessory (4) from turning inside the working receptacle (1), and **in that** said accessory (4) can be placed in the receptacle (1) in any angular position, said accessory (4), when the appliance is switched on, being capable of turning within the receptacle (1) until the stop element (49) comes to bear against the wall of the lid (2).

2. A household electrical appliance according to claim 1, **characterized in that** said working receptacle (1) is a bowl of circular section having an inside wall that is smooth.

3. A household electrical appliance according to claim 1 or claim 2, **characterized in that** the accessory (4) is raised towards the lid (2) by the flowing mixture of food generated while the appliance is in operation.

4. A household electrical appliance according to any one of claims 1 to 3, in which said stop element (49) is suitable for coming to bear against the wall solely once said accessory (4) has been raised by said flowing mixture.

5. A household electrical appliance according to claim 3 or claim 4, **characterized in that** the lid (2) includes a chimney (22) for inserting food into the receptacle (1), and **in that** said stop element is a tongue (49) that becomes inserted in the chimney (22) while the appliance is in operation.

6. A household electrical appliance according to any one of claims 1 to 5, **characterized in that** said cutter tool (3) includes a hub (31) extending in the center of the receptacle (1), and **in that** said accessory (4) includes a centering sleeve (45) with an end wall that rests on the hub (31) of the cutter tool (3) when the accessory (4) is put into place in the receptacle (1), said accessory (4) being lifted off the hub (31) while the appliance is in operation.

7. A household electrical appliance according to any one of claims 1 to 6, **characterized in that** said accessory (4) includes arms (42) that take up positions close to the inside walls of the receptacle (1), said arms (42) carrying splines (43) enabling the flowing mixture to be redirected towards the center of the receptacle (1), and outer fins (46) coming close to the inside wall of the receptacle (1).

8. An accessory for a food-processing household electrical appliance, the accessory being for insertion in a working receptacle (1) containing a rotary tool (3), said receptacle (1) being closed by a removable lid (2), the accessory being **characterized in that** said accessory (4) includes a stop element (49) that comes to bear against a wall of the lid (2) while the appliance is in operation so as to lock the accessory (4) against turning inside the working receptacle (1), and **in that** said accessory (4) can be disposed in the receptacle (1) in any angular position, and said accessory (4) being capable, when the appliance is switched on, of turning inside the receptacle (1) until the stop element (49) comes to bear against the wall of the lid (2).

9. An accessory for a household electrical appliance according to claim 8, **characterized in that** said stop element (49) is a tongue for being inserted in a food-insertion chimney of the lid.

10. An accessory for a household electrical appliance according to claim 8 or claim 9, **characterized in that** it includes a centering sleeve (45) for resting on a hub (31) of the cutter tool (3) when the accessory (4) is put into place in the receptacle.

11. An accessory for a household electrical appliance according to any one of claims 8 to 10, **characterized in that** it has arms (42) for placing close to the inside wall of the receptacle (1), said arms (42) carrying splines (43) enabling the flowing mixture to be redirected towards the center of the receptacle (1) and outer fins (46) coming close to the inside wall of the receptacle (1).

## Patentansprüche

1. Elektrohaushaltsgerät zur Nahrungsmittelzubereitung, mit einem Arbeitsbehälter (1), der durch einen abnehmbaren Deckel (2) verschlossen ist, und einem Zubehörteil (4), das im Behälter (1) angeordnet sein kann, wobei der Behälter (1) ein Schneidwerkzeug (3) umschließt, das am Boden des Arbeitsbehälters (1) angeordnet ist und von einem Motor in Drehung versetzt wird, **dadurch gekennzeichnet, dass** das Zubehörteil (4) ein Anschlagelement (49) aufweist, das während des Betriebs des Geräts an eine Wand (23) des Deckels (2) in Anlage gelangt, um die Drehblockierung des Zubehörteils (4) im Arbeitsbehälter (1) zu gewährleisten, und dass das Zubehörteil (4) in einer beliebigen Winkelposition im Behälter (1) angeordnet sein kann, wobei das Zubehörteil (4) sich beim Einschalten des Geräts im Behälter (1) drehen kann, bis das Anschlagelement (49) an der Wand des Deckels (2) anliegt.

2. Elektrohaushaltsgerät nach Anspruch 1, **dadurch gekennzeichnet, dass** der Arbeitsbehälter (1) eine Schale mit einem kreisförmigen Querschnitt ist, die eine glatte Innenwand aufweist.

3. Elektrohaushaltsgerät nach Anspruch 1 oder 2, **dadurch gekennzeichnet, dass** das Zubehörteil (4) durch den Fluss des Mixens der Nahrungsmittel, der beim Einschalten des Geräts erzeugt wird, zum Deckel (2) hin angehoben wird.

4. Elektrohaushaltsgerät nach einem der Ansprüche 1 bis 3, **dadurch gekennzeichnet, dass** das Anschlagelement (49) nur dann an die Wand in Anlage gelangen kann, wenn das Zubehörteil (4) von dem Mixfluss angehoben wird.

5. Elektrohaushaltsgerät nach Anspruch 3 oder 4, **dadurch gekennzeichnet, dass** der Deckel (2) einen Schacht (22) zum Einführen der Nahrungsmittel in den Behälter (1) aufweist und das Anschlagelement eine Lasche (49) ist, die sich während des Betriebs des Geräts in den Schacht (22) einfügt.

6. Elektrohaushaltsgerät nach einem der Ansprüche 1 bis 5, **dadurch gekennzeichnet, dass** das Schneidwerkzeug (3) eine Nabe (31) aufweist, die sich in der Mitte des Behälters (1) erstreckt, und dass das Zubehörteil (4) einen Zentrierungsstutzen (45) aufweist, dessen Boden sich beim Einsetzen des Zubehörteils (4) in den Behälter (1) an der Nabe (31) des Schneidwerkzeugs (3) abstützt, wobei sich das Zubehörteil (4) während des Betriebs des Geräts von der Nabe (31) hebt.

7. Elektrohaushaltsgerät nach einem der Ansprüche 1 bis 6, **dadurch gekennzeichnet, dass** das Zubehörteil (4) Arme (42) aufweist, die eine Position nahe den Innenwänden des Behälters (1) einnehmen, wobei die Arme (42) Rippen (43) aufweisen, die die erneute Orientierung des Mixflusses zur Mitte des Behälters (1) ermöglichen, sowie Außenflügel (46), die in die Nähe der Innenwand des Behälters (1) gelangen.

8. Zubehörteil für ein Elektrohaushaltsgerät zur Nahrungsmittelzubereitung, das in einen Arbeitsbehälter (1), der ein Drehwerkzeug (3) umschließt, eingesetzt werden soll, wobei der Behälter (1) durch einen abnehmbaren Deckel (2) verschlossen ist, **dadurch gekennzeichnet, dass** das Zubehörteil (4) ein Anschlagelement (49) aufweist, das während des Betriebs des Geräts an eine Wand des Deckels (2) in Anlage gelangt, um die Drehblockierung des Zubehörteils (4) im Arbeitsbehälter (1) zu gewährleisten, und dass das Zubehörteil (4) in einer beliebigen Winkelposition im Behälter (1) angeordnet sein kann, wobei sich das Zubehörteil (4) beim Einschalten des Geräts im Behälter (1) drehen kann, bis das Anschlagelement (49) an der Wand des Deckels (2) anliegt.

9. Zubehörteil für ein Elektrohaushaltsgerät nach Anspruch 8, **dadurch gekennzeichnet, dass** das Anschlagelement eine Lasche (49) ist, die sich in einen Nahrungsmitteleinführschacht des Deckels einfügen soll.

10. Zubehörteil für ein Elektrohaushaltsgerät nach Anspruch 8 oder 9, **dadurch gekennzeichnet, dass** es einen Zentrierungsstutzen (45) aufweist, der sich beim Einsetzen des Zubehörteils (4) in den Behälter an einer Nabe (31) des Schneidwerkzeugs (3) abstützen soll.

11. Zubehörteil für ein Elektrohaushaltsgerät nach einem der Ansprüche 8 bis 10, **dadurch gekennzeichnet, dass** es Arme (42) aufweist, die in die Nähe der Innenwand des Behälters (1) gelangen sollen, wobei die Arme (42) Rippen (43) aufweisen, die die erneute Orientierung des Mixflusses zur Mitte des Behälters (1) ermöglichen, sowie Außenflügel (46), die sich der Innenwand des Behälters (1) annähern.
